# FASCICULE DE BREVET EUROPEEN

(11) **EP 3 350 052 B1**
(45) Date de publication et mention de la délivrance du brevet: **04.09.2019**
(21) Numéro de dépôt: 16742369.8
(22) Date de dépôt: 01.07.2016
(51) Int. Cl.: B61D 3/18

(54) **DISPOSITIF DE DETECTION DE CHOC POUR SYSTEME DE VERROUILLAGE DU PIVOT D'ATTELAGE D'UNE SEMI-REMORQUE SUR UNE UNITE FERROVIAIRE**
AUFPRALLDETEKTOR FÜR EIN SYSTEM ZUR VERRIEGELUNG DES ACHSZAPFENS EINES SATTELAUFLIEGERS AUF EINEM SCHIENENFAHRZEUG
IMPACT DETECTION DEVICE FOR A SYSTEM FOR LOCKING THE KINGPIN OF A SEMITRAILER ON A RAILWAY UNIT

(30) Priorité: 14.09.2015 FR 1558582
(43) Date de publication de la demande: 25.07.2018
(73) Titulaire: Lohr Industrie, 67980 Hangenbieten (FR)
(72) Inventeur: ANDRE, Jean-Luc, 67120 Molsheim (FR); KRETZ, Nicolas, BERNARDSWILLER 67210 (FR); OBER, Jacques, 67000 Strasbourg (FR)
(74) Mandataire: Merckling, Norbert
(86) Numéro de dépôt international: PCT/FR2016/051673
(87) Numéro de publication internationale: WO 2017/046461

(56) Documents cités:
- EP-A1- 1 813 497
- EP-B1- 1 874 607

## Description

### Domaine technique

La présente invention se rapporte au domaine des systèmes de verrouillage du pivot d'attelage d'une semi-remorque sur une unité ferroviaire dans les dispositifs de transport des semi-remorques par voie ferroviaire.

L'invention concerne plus particulièrement un dispositif de détection de choc permettant de détecter et de générer une alerte dans le cas où une unité ferroviaire transportant une semi-remorque a subi un choc susceptible de détériorer le pivot d'attelage de la semi-remorque.

### Etat de la technique

Le pivot d'attelage des semi-remorques normalisées est prévu pour venir s'engager de façon dissociable sur une sellette portée par un véhicule tracteur afin de former une articulation de pivotement permettant le déplacement des semi-remorques par le véhicule tracteur qui leur est associé.

Par le brevet EP 1874607 au nom du déposant, on connait un système de verrouillage du pivot d'attelage d'une semi-remorque sur une unité ferroviaire dans lequel une pièce de capotage est montée, par une ouverture centrale, sur le pivot d'attelage des semi-remorques afin d'être reçue dans un élément récepteur, dénommée nacelle, qui est montée sur l'unité ferroviaire. Cette nacelle a notamment pour but de centrer automatiquement et de verrouiller la pièce de capotage, et donc le pivot d'attelage, lors de la réception de la pièce de capotage dans la nacelle. Cette nacelle est habituellement actionnée par un moyen d'élévation permettant de la déplacer verticalement afin de recevoir la pièce de capotage et le pivot d'attelage en vue de son maintien et de son verrouillage.

En cas de tamponnage de l'unité ferroviaire portant la semi-remorque, ou lors d'autres événements, un choc brutal peut être transmis au pivot d'attelage par le système de verrouillage. Alors que le système de verrouillage du déposant répond aux normes ferroviaires, il n'est pas détérioré par un tel choc, lequel peut correspondre à un effort de plusieurs dizaines de tonnes. Au niveau de la pièce de capotage, cependant, ce choc risque de détériorer le pivot d'attelage, car celui-ci répond aux normes routières, qui sont moins exigeantes que les normes ferroviaires sur ce point.

Une telle détérioration du pivot d'attelage n'est pas facilement décelable. Ainsi, après un choc violent lors d'un tamponnage, un pivot d'attelage peut être fragilisé sans que cela ne soit détecté. Ignorant cette fragilité, le chauffeur décharge alors la semi-remorque de l'unité ferroviaire pour l'emmener à sa destination finale en la tractant avec son véhicule tracteur. Lors de ce trajet, le pivot d'attelage fragilisé est susceptible de se rompre, ce qui peut avoir des conséquences dramatiques.

Il existe donc un besoin pour un dispositif de détection de choc qui permettent de détecter si unité ferroviaire portant la semi-remorque a subi un choc susceptible de détériorer le pivot d'attelage. Un tel dispositif de détection de choc doit avantageusement pouvoir être calibré pour se déclencher au delà d'un seuil de prédéterminé.

Suivant les requis de l'exploitation, ce seuil peut être modifié pour permettre de détecter des chocs plus faibles, notamment dans un souci de protection des marchandises transportées, ou plus importants, par exemple dans le cas de normes ferroviaires différentes.

### Description de l'invention

L'objet de la présente invention vise par conséquent à répondre aux inconvénients évoqués plus haut en proposant un dispositif de détection de choc pour système de verrouillage du pivot d'attelage d'une semi-remorque sur une unité ferroviaire.

Les objets assignés à l'invention sont atteints à l'aide d'une unité ferroviaire sur laquelle une semi-remorque est destinée à être chargée. Cette unité ferroviaire comporte un système de verrouillage du pivot d'attelage de ladite semi-remorque comprenant une structure réceptrice prévue pour recevoir ledit pivot d'attelage. Elle comporte également une conduite générale d'alimentation en fluide alimentant et commandant notamment les freins de l'unité ferroviaire.

Selon l'invention, l'unité ferroviaire comporte en outre un dispositif de détection de choc comprenant les moyens suivants :
- une pièce rigide de liaison reliée à la structure réceptrice, les chocs subits par la structure réceptrice étant transmis à ladite pièce rigide de liaison ;
- au moins un axe de liaison par lequel la pièce rigide de liaison est reliée à l'unité ferroviaire, cet axe de liaison étant monté sur l'unité ferroviaire, reçu à pivotement dans un oblong prévu dans la pièce rigide de liaison et susceptible de se déplacer dans l'oblong selon une course limitée D prévue de chaque côté dans l'oblong ;
- au moins une goupille de cisaillement introduite à travers l'axe de liaison et l'oblong qui empêche le déplacement de l'axe de liaison dans l'oblong, cette goupille de cisaillement étant prévue pour se rompre en cas de choc dépassant un certain seuil et permettre alors le déplacement de l'axe de liaison dans l'oblong ;
- au moins une conduite de dérivation montée en dérivation sur la conduite générale de l'unité ferroviaire, cette conduite de dérivation étant solidarisée à la pièce rigide de liaison ;
- au moins un outil de sectionnement solidarisé à l'unité ferroviaire, qui sectionne une partie de la conduite de dérivation lorsqu'une goupille de cisaillement est rompue et qu'un axe de liaison se déplace dans l'oblong qui lui est associé.

Fonctionnant sans énergie, le dispositif de détection de choc de l'invention est par conséquent satisfaisant du point de vue de la sécurité. Grâce au sectionnement d'une partie de la conduite de dérivation et à la fuite de fluide qui en résulte, les utilisateurs sont avantageusement alertés du fait qu'un choc important a été subit par un pivot d'attelage, de sorte que ce dernier puisse être inspecté afin de savoir notamment si la semi-remorque est utilisable en l'état ou non.

Selon un exemple de mise en oeuvre de l'invention, la pièce rigide de liaison comprend des bras reliés à la structure réceptrice, chaque bras rigide étant en outre relié à l'unité ferroviaire par un axe de liaison monté sur l'unité ferroviaire, cet axe de liaison étant reçu à pivotement dans un oblong prévu dans chaque bras rigide et susceptible de se déplacer dans cet oblong selon une course limitée D prévue de chaque côté dans l'oblong, et en ce qu'une goupille de cisaillement est introduite à travers l'oblong de chaque bras rigide et l'axe de liaison qui lui est associé.

Selon cet exemple de mise en oeuvre de l'invention, chaque bras rigide peut être associé à une goupille de cisaillement, à une conduite de dérivation et à un outil de sectionnement qui sont distincts de ceux des autres bras rigides.

Selon un autre exemple de mise en oeuvre de l'invention, chaque axe de liaison est horizontal et transversal par rapport à l'unité ferroviaire, tandis que la pièce rigide de liaison s'étend de manière longitudinale par rapport à l'unité ferroviaire.

Selon un exemple de mise en oeuvre de l'invention, la pièce rigide de liaison est montée de manière articulée sur la structure réceptrice au niveau d'une première extrémité.

Selon un autre exemple de mise en oeuvre de l'invention, la pièce rigide de liaison est montée de manière articulée sur l'unité ferroviaire au niveau d'une seconde extrémité.

Selon un exemple de mise en oeuvre de l'invention, chaque goupille de cisaillement est sous la forme d'une tige filetée présentant par exemple des zones d'affaiblissement prévus pour se rompre en cas de choc dépassant un certain seuil.

Selon cet exemple de mise en oeuvre de l'invention, chaque goupille de cisaillement peut comporter une première gorge circulaire d'affaiblissement prévue en partie supérieure de l'oblong et une seconde gorge circulaire d'affaiblissement prévue en partie inférieure de l'oblong.

Selon un exemple de mise en oeuvre de l'invention, chaque conduite de dérivation est une conduite de dérivation semi-rigide.

Selon un autre exemple de mise en oeuvre de l'invention, la partie de chaque conduite de dérivation prévue pour être sectionnée est située à proximité immédiate d'un outil de sectionnement associé se présentant sous la forme d'une guillotine comportant deux lames prévues chacune à l'avant et à l'arrière de la partie à sectionner de la conduite de dérivation.

Selon un exemple supplémentaire de mise en oeuvre de l'invention, chaque outil de sectionnement comprend une plaque présentant une ouverture pour le passage de la partie de la conduite de dérivation prévue pour être sectionnée, les flancs verticaux de cette ouverture étant pourvus d'un élément tranchant qui coupe la conduite de dérivation lorsque la pièce rigide de liaison se déplace longitudinalement.

Selon un exemple de mise en oeuvre de l'invention, une conduite de dérivation et un outil de sectionnement associé sont prévus de chaque côté de la partie par laquelle la pièce rigide de liaison est reliée à l'unité ferroviaire.

Selon un exemple de mise en oeuvre de l'invention, le dispositif de détection de choc comprend un robinet d'isolement permettant d'isoler la ou les conduites de dérivation par rapport à la conduite générale.

Ainsi, notamment dans le cas préféré ou l'alerte des utilisateurs concernant le choc subi s'effectue par un blocage des freins de l'unité ferroviaire, le dispositif de détection de choc de l'invention est réversible et permet ainsi le déblocage des freins. Une fois actionné par un choc important, le dispositif de détection de choc n'empêche ni le fonctionnement du système de verrouillage du pivot d'attelage d'une semi-remorque sur une unité ferroviaire, ni le déchargement de la semi-remorque concernée hors de l'unité ferroviaire.

Selon un exemple de mise en oeuvre de l'invention, la pièce rigide de liaison comporte un dispositif de protection de la structure réceptrice. Selon cet exemple de mise en oeuvre de l'invention, le dispositif de protection comprend une bâche montée pivotante et prévue pour pouvoir être pivotée sur la structure réceptrice pour la recouvrir au moins partiellement lorsqu'aucune semi-remorque n'est chargée sur l'unité ferroviaire. Un tel dispositif de protection permet notamment de protéger la structure réceptrice des intempéries.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue en perspective avant d'une partie d'une unité ferroviaire comportant un système de verrouillage du pivot d'attelage des semi-remorques ainsi qu'un dispositif de détection de choc selon l'invention ;

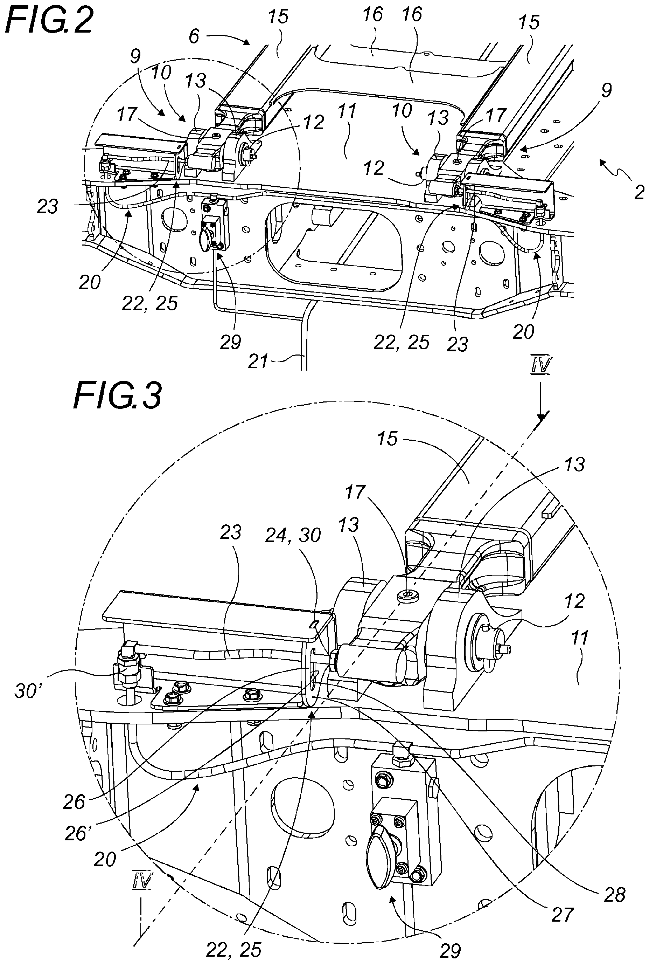

- la figure 2 est une vue en perspective arrière de l'unité ferroviaire de la figure 1 ;
- la figure 3 est une vue de détail de la partie encerclée sur la figure 2 ;
- la figure 4 est une vue en coupe verticale de l'unité ferroviaire de la figure 1 au niveau de l'axe de coupe représenté sur la figure 3 ; et

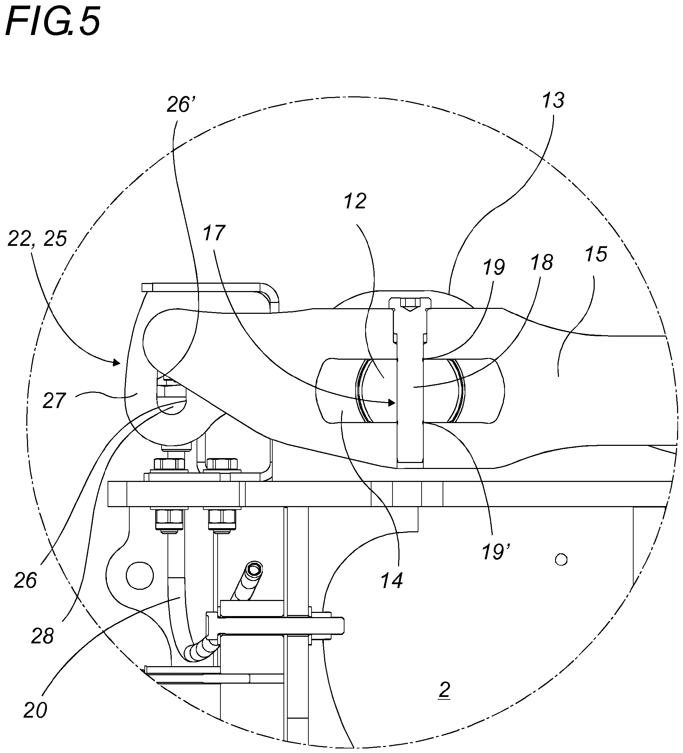

- la figure 5 est une vue de détail de la partie encerclée sur la figure 4.

### Mode(s) de réalisation de l'invention

Les éléments structurellement et fonctionnellement identiques présents sur plusieurs figures distinctes, sont affectés d'une même référence numérique ou alphanumérique.

Le système de verrouillage (1) du pivot d'attelage d'une semi-remorque sur une unité ferroviaire (2) développé par le déposant comprend une nacelle réceptrice (3) montée mobile verticalement sur une unité ferroviaire (2) et prévue pour recevoir une pièce de capotage montée par une ouverture centrale sur le pivot d'attelage d'une semi-remorque. Le déplacement vertical de la nacelle réceptrice (3) est assuré par un dispositif (4) comprenant des moyens de montée et descente de la nacelle, ainsi que des moyens de guidage, d'équilibrage et/ou de reprise des efforts de celle-ci. Les moyens de montée et descente de la nacelle comprennent par exemple un vérin à vis disposé verticalement sous la nacelle.

Lorsque la semi-remorque est placée sur l'unité ferroviaire (2), son pivot d'attelage, équipé d'une pièce de capotage, est positionné au-dessus de la nacelle réceptrice (3). La nacelle réceptrice (3) est alors déplacée vers le haut pour recevoir la pièce de capotage qui équipe le pivot d'attelage. Cette pièce de capotage est alors centrée, immobilisée latéralement et longitudinalement, et verrouillée verticalement par la nacelle réceptrice (3).

A titre d'exemple, la nacelle réceptrice (3) représentée sur les figures comprend deux rangées d'éléments basculants, comportant chacun une masselotte et dont la forme est étudiée pour assurer un rappel gravitaire en verrouillage de la pièce de capotage.

Bien que l'invention soit décrite ici pour un système de verrouillage (1) utilisant une nacelle réceptrice (3), le dispositif de détection de choc (4) de l'invention s'adresse cependant à tout type de structure réceptrice (5) d'un pivot d'attelage, que le pivot d'attelage soit reçu dans une telle structure réceptrice (5) par l'intermédiaire d'une pièce de capotage ou non.

L'unité ferroviaire (2) est préférentiellement un wagon de transport combiné rail-route pour semi-remorques.

Le dispositif de détection de choc (4) de l'invention comprend une pièce rigide de liaison (6) répondant aux normes de solidité ferroviaire.

A une première extrémité (7), cette pièce rigide de liaison (6) est montée articulée par une première articulation (8) à la nacelle réceptrice (3) ou à toute autre structure réceptrice (5) du pivot d'attelage d'une semi-remorque.

A la seconde extrémité (9), la pièce rigide de liaison (6) est reliée articulée à l'unité ferroviaire (2) par une seconde articulation (10), par exemple en étant montée de manière articulée sur son châssis (11).

Disposé préférentiellement longitudinalement par rapport à l'unité ferroviaire (2), la pièce rigide de liaison (6) reprend les efforts horizontaux exercés sur la structure réceptrice (5) par le pivot d'attelage de la semi-remorque portée par l'unité ferroviaire (2) lorsque le pivot d'attelage est reçu dans la structure réceptrice (5).

La seconde articulation (10) comprend un axe de liaison (12) solidaire de l'unité ferroviaire (2) par l'intermédiaire de joues (13), par exemple prévu au niveau de la seconde extrémité (9) de la pièce rigide de liaison (6) et monté à pivotement dans un oblong (14) prévu dans la pièce rigide de liaison (6). Cet axe de liaison (12) est préférentiellement horizontal et transversal par rapport à l'unité ferroviaire (2), tandis que les joues (13) dans lesquelles il est monté à rotation sont verticales.

L'oblong (14) présente une longueur suffisante permettant un espacement libre entre l'axe de liaison (12) et les butées d'extrémité de l'oblong (14), de sorte de permettre une course limitée D de chaque côté pour l'axe de liaison (12) lorsqu'il peut se déplacer librement dans l'oblong (14).

Selon un mode réalisation préféré illustré à titre d'exemple sur les dessins, la pièce rigide de liaison (6) comprend des bras rigides (15), de préférence longitudinaux, reliés par des traverses (16). Ces bras rigides (15) sont préférentiellement au nombre de deux, mais peuvent être prévus en nombre supérieur. Selon ce mode réalisation, chaque bras rigide (15) est ainsi monté articulé à la structure réceptrice (5) par une première articulation (8) au niveau d'une première extrémité (7) et monté articulé au châssis (11) de l'unité ferroviaire (2) par une seconde articulation (10) au niveau d'une seconde extrémité (9). Chaque seconde articulation (10) comprend alors un axe de liaison (12) monté à pivotement dans un oblong (14) prévu au niveau de la seconde extrémité (9) de chaque bras rigide (15).

Le déplacement de chaque axe de liaison (12) dans l'oblong (14) est empêché par l'introduction d'une goupille de cisaillement (17) à travers chaque oblong (14) et l'axe de liaison (12) qui lui est associé. Chaque axe de liaison (12) est ainsi bloqué en déplacement par la goupille de cisaillement (17), mais pas en pivotement dans l'oblong (14) qui lui est associé, chaque axe de liaison (12) étant alors préférentiellement situé au milieu de l'oblong (14) qui lui est associé, autorisant une course limitée D de chaque côté.

La goupille de cisaillement (17) est prévue pour se rompre en cas de choc dépassant un certain seuil, choc qui se traduit par un effort entre chaque axe de liaison (12) et chaque oblong (14) et qui est subit par la goupille de cisaillement (17).

Chaque goupille de cisaillement (17) est par exemple sous la forme d'une tige filetée (18), par exemple en acier, introduite verticalement à travers l'oblong (14) et l'axe de liaison (12), dans un orifice traversant prévu à la fois dans la seconde extrémité (9) de la pièce de liaison et dans l'axe de liaison (12). Elle présente par exemple des zones d'affaiblissement, par exemples sous la forme de deux gorges circulaires d'affaiblissement (19, 19'), prévues pour se rompre en cas de choc dépassant un certain seuil, avec une première gorge circulaire d'affaiblissement (19) prévue en partie supérieure de l'oblong (14) et une seconde gorge circulaire d'affaiblissement (19') prévue en partie inférieure de l'oblong (14).

Le diamètre et la matière de la goupille de cisaillement (17), ainsi que la profondeur, la disposition et le nombre des zones d'affaiblissement sont calibrés de sorte que la goupille de cisaillement (17) ne soit rompue qu'en cas de choc dépassant un certain seuil, choc pouvant se traduire par une détérioration potentielle du pivot d'attelage.

Le dispositif de détection de choc (4) de l'invention comprend également une conduite de dérivation (20) fixée au niveau de la seconde extrémité (9) de la pièce rigide de liaison (6) et montée en dérivation sur la conduite générale (21), habituellement pneumatique, qui alimente et commande notamment les freins de l'unité ferroviaire (2). Une telle conduite générale (21) équipe habituellement tous les wagons ferroviaires.

La conduite de dérivation (20) du dispositif de détection de choc (4) de l'invention est préférentiellement une conduite de dérivation (20) semi-rigide fabriquée en polyamide.

Une partie de cette conduite de dérivation (20) est prévue à proximité immédiate d'un outil de sectionnement (22) monté au niveau de la seconde extrémité (9) de la pièce rigide de liaison (6), de sorte que lorsque la pièce rigide de liaison (6) se déplace dans l'oblong (14) dans lequel elle est maintenue en pivotement, l'outil de sectionnement (22) sectionne la conduite de dérivation (20).

Bien entendu, la course limitée D doit être suffisante pour permettre le sectionnement de la conduite de dérivation (20) par l'outil de sectionnement (22).

On notera qu'un sectionnement complet de la conduite de dérivation (20) par l'outil de sectionnement (22) n'est pas forcément nécessaire, bien que souhaitable, mais qu'une entaille importante de la conduite de dérivation (20) par l'outil de sectionnement (22) peut suffire au fonctionnement du dispositif de détection de choc (4) selon l'invention.

La partie (23) de la conduite de dérivation (20) qui est prévue pour être sectionnée est préférentiellement fabriquée en polyamide. Un autre matériau peut être utilisé si celui-ci permet de se faire sectionner par une lame en acier.

La partie (23) de la conduite de dérivation (20) qui est prévue pour être sectionnée est préférentiellement située à proximité de son point de fixation (24) sur la pièce rigide de liaison (6).

L'outil de sectionnement (22) se présente préférentiellement sous la forme d'une guillotine (25) comportant deux lames (26, 26') prévues chacune à l'avant et à l'arrière de la partie (23) à sectionner de la conduite de dérivation (20) pour la trancher lorsque l'outil de sectionnement (22) se déplace longitudinalement.

L'outil de sectionnement (22) comprend préférentiellement une plaque (27) présentant une ouverture (28) pour le passage de la partie (23) de la conduite de dérivation (20) prévue pour être sectionnée en cas de choc important. Les flancs verticaux de cette ouverture (28) sont chacun pourvus d'un élément tranchant, ou d'une lame (26, 26'), par exemple sous la forme d'un bord biseauté, qui coupe la conduite de dérivation (20) lorsque la pièce rigide de liaison (6) se déplace longitudinalement.

Une conduite de dérivation (20) et un outil de sectionnement (22) associé sont préférentiellement prévus de chaque côté de la pièce rigide de liaison (6), au niveau de sa seconde articulation (10).

Selon le mode réalisation préféré où la pièce rigide de liaison (6) est sous la forme de deux bras rigides (15), une goupille de cisaillement (17) est prévue dans l'axe de liaison (12) et l'oblong (14) de chaque seconde articulation (10) desdits bras rigides (15), et une conduite de dérivation (20) et un outil de sectionnement (22) associé sont prévus au niveau de chacune de ces secondes articulations (10).

En cas de tamponnage de l'unité ferroviaire (2) comportant le dispositif de détection de choc (4) de l'invention, la pièce rigide de liaison (6) subit un effort longitudinal qui est transmis à la fois au pivot d'attelage, mais également à la goupille de cisaillement (17). Si la violence du choc est susceptible de détériorer le pivot d'attelage, la goupille de cisaillement (17) est rompue.

Dans le cas où le dispositif de détection de choc (4) de l'invention comprend plusieurs goupilles de cisaillement (17), conduites de dérivation (20) et outils de sectionnement (22), au moins une des goupilles de cisaillement (17) est alors rompue et l'outil de sectionnement (22) ainsi déplacé sectionne alors la conduite de dérivation (20) concernée.

Ce sectionnement d'une conduite de dérivation (20) provoque alors une fuite dans la conduite générale (21), ce qui provoque l'activation des freins de l'unité ferroviaire (2). En effet, ces freins sont habituellement à sécurité positive, et toute baisse de pression dans la conduite générale (21) provoque l'activation du freinage, dont l'intensité est proportionnelle à la valeur de la baisse de pression dans la conduite générale (21).

Une telle activation des freins de l'unité ferroviaire (2) alerte alors immédiatement les utilisateurs tout en empêchant la circulation de l'unité ferroviaire (2) transportant une semi-remorque dont le pivot d'attelage est potentiellement détérioré.

Selon un mode de réalisation préféré de l'invention la partie (23) de la conduite de dérivation (20) qui est prévue pour être sectionnée est facilement visible de l'extérieur, ce qui permet aux utilisateurs d'identifier facilement l'unité ferroviaire (2) dont la conduite de dérivation (20) a été sectionnée. Afin de stopper la fuite au niveau de la conduite générale (21), le dispositif de détection de choc (4) de l'invention comprend un robinet d'isolement (29) permettant d'isoler la ou les conduites de dérivation (20) qui ont été sectionnées.

Un seul robinet d'isolement (29) peut être prévu pour toutes les conduites de dérivation (20) d'un même dispositif de détection de choc (4) ou alors un robinet d'isolement (29) peut être prévu pour chacune d'entre elles.

Lorsque l'unité ferroviaire (2) dont la conduite de dérivation (20) a été sectionnée a été identifiée, les utilisateurs sont alors informés que le pivot d'attelage de la semi-remorque portée par cette unité ferroviaire (2) est potentiellement détérioré. Il leur suffit alors de contrôler l'intégrité de celui-ci, par exemple sur place en sortant le pivot d'attelage hors de la structure réceptrice (5), ou ailleurs, en déplaçant la semi-remorque et/ou l'unité ferroviaire (2) afin de pouvoir contrôler le pivot d'attelage plus tard, sans retarder le transport des autres unités ferroviaires attelées à l'unité ferroviaire (2) concernée.

Lorsqu'une goupille de cisaillement (17) a été rompue, le système de verrouillage (1) du pivot d'attelage d'une semi-remorque sur une unité ferroviaire (2) reste entièrement fonctionnel. L'axe de liaison (12) de la pièce rigide de liaison (6) est toujours maintenu dans les oblongs (14), avec un léger jeu longitudinal correspondant aux courses limitées D prévue de chaque côté dans chaque oblong (14) qui ne gêne pas son fonctionnement. Le déplacement longitudinal de chaque axe de liaison (12) de la seconde articulation (10) dans l'oblong (14) qui lui est associé, en cas de rupture de la goupille de cisaillement (17), reste limité en butée par la course limitée D.

La course limitée D est prévue en avant et en arrière de chaque axe de liaison (12) de la seconde articulation (10) se sorte que le dispositif de détection de choc (4) de l'invention fonctionne de manière équivalente en cas de choc avant ou arrière. C'est également pour cette raison que l'outil de sectionnement (22) présente deux lames (26, 26') prévues chacune à l'avant et à l'arrière de la partie (23) de la conduite de dérivation (20) prévue pour être sectionnée en cas de choc important.

Afin de pouvoir réutiliser le dispositif de détection de choc (4) de l'invention, il suffit de remplacer la ou les goupilles de cisaillement (17) qui ont été brisées, ainsi que la partie de la ou des conduites de dérivation (20) qui ont été sectionnées.

Par exemple montée entre deux raccords (30, 30'), la partie (23) de la conduite de dérivation (20) qui est prévue pour être sectionnée peut être facilement remplacée.

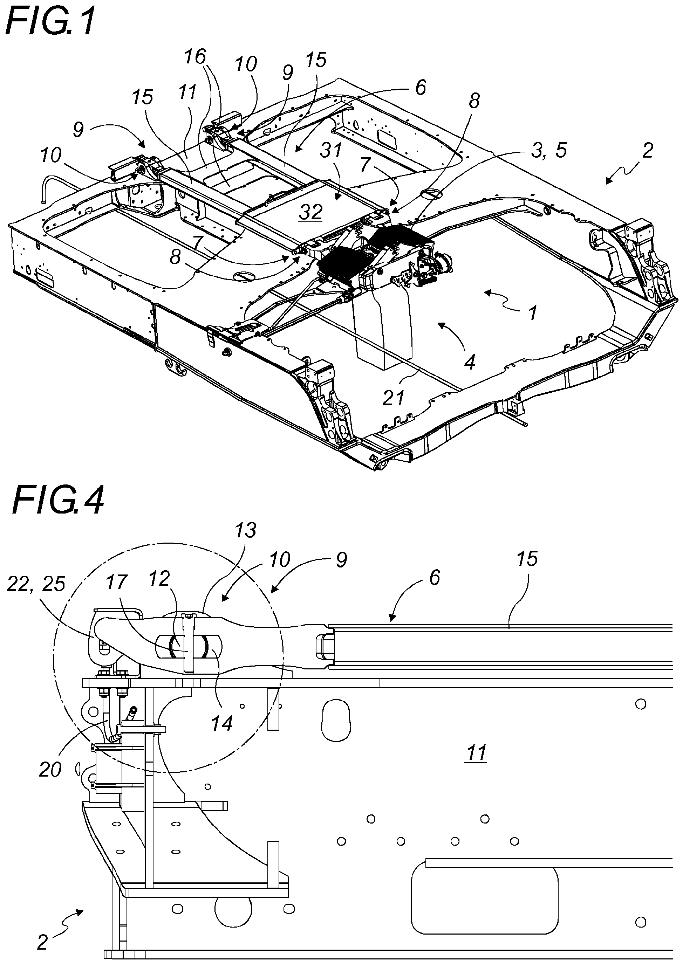

Selon une autre variante de l'invention, la pièce rigide de liaison (6) peut également comporter un dispositif de protection (31) de la structure réceptrice (5). Telle qu'illustrée à titre d'exemple sur la figure 1, ce dispositif de protection (31) peut être sous la forme d'une bâche (32) montée pivotante et prévue pour pouvoir être pivotée sur la structure réceptrice (5) de sorte de la recouvrir au moins partiellement afin de de la protéger des intempéries lorsque l'unité ferroviaire (2) ne porte pas de semi-remorque.

Il est évident que la présente description ne se limite pas aux exemples explicitement décrits, mais comprend également d'autres modes de réalisation et/ou de mise en oeuvre. Ainsi, une caractéristique technique décrite peut être remplacée par une caractéristique technique équivalente sans sortir du cadre de la présente invention et une étape décrite de mise en oeuvre du procédé peut être remplacée par une étape équivalente sans sortir du cadre de l'invention tel que défini par les revendications.

Par exemple, bien que la pièce rigide de liaison (6) ait été représentée sur le figure reliée par ses deux extrémités (7, 9) à l'unité ferroviaire (2) et à la structure réceptrice (5) de pivot d'attelage, il est évident que la pièce rigide de liaison (6) puisse être reliée différemment à l'unité ferroviaire (2) et à la structure réceptrice (5) de pivot d'attelage du moment que les chocs subit par l'unité ferroviaire (2) soient transmis à la pièce rigide de liaison (6) et à la goupille de cisaillement (17).

De même, l'orientation des différents moyens constitutifs du dispositif de détection de choc (4) sont représentés sur les dessins selon une configuration permettant de détecter les chocs longitudinaux, qui sont les plus violents et les plus fréquents, notamment lors des tamponnages ferroviaires. Il est cependant évident pour l'homme du métier d'adapter l'orientation de ces différents moyens constitutifs à la détections de chocs selon une autre direction.

## Revendications

1. Unité ferroviaire (2) sur laquelle une semi-remorque est destinée à être chargée, qui comporte un système de verrouillage (1) du pivot d'attelage de ladite semi-remorque comprenant une structure réceptrice (5) prévue pour recevoir ledit pivot d'attelage, et qui comporte une conduite générale (21) d'alimentation en fluide alimentant et commandant notamment les freins de l'unité ferroviaire (2), **caractérisée en ce qu'**elle comporte en outre un dispositif de détection de choc (4) comprenant les moyens suivants :
- une pièce rigide de liaison (6) reliée à la structure réceptrice (5), les chocs subis par la structure réceptrice (5) étant transmis à ladite pièce rigide de liaison (6) ;
- au moins un axe de liaison (12) par lequel la pièce rigide de liaison (6) est reliée à l'unité ferroviaire (2), cet axe de liaison (12) étant monté sur l'unité ferroviaire (2), reçu à pivotement dans un oblong (14) prévu dans la pièce rigide de liaison (6) et susceptible de se déplacer dans l'oblong (14) selon une course limitée D prévue de chaque côté dans l'oblong (14) ;
- au moins une goupille de cisaillement (17) introduite à travers l'axe de liaison (12) et l'oblong (14) qui empêche le déplacement de l'axe de liaison (12) dans l'oblong (14), cette goupille de cisaillement (17) étant prévue pour se rompre en cas de choc dépassant un certain seuil et permettre alors le déplacement de l'axe de liaison (12) dans l'oblong (14) ;
- au moins une conduite de dérivation (20) montée en dérivation sur la conduite générale (21) de l'unité ferroviaire (2), cette conduite de dérivation (20) étant solidarisée à la pièce rigide de liaison (6) ;
- au moins un outil de sectionnement (22) solidarisé à l'unité ferroviaire (2), qui sectionne une partie (23) de la conduite de dérivation (20) lorsqu'une goupille de cisaillement (17) est rompue et qu'un axe de liaison (12) se déplace dans l'oblong (14) qui lui est associé.

2. Unité ferroviaire (2) selon la revendication 1, **caractérisée en ce que** la pièce rigide de liaison (6) comprend des bras rigides (15) reliés à la structure réceptrice (5), chaque bras rigide (15) étant en outre relié à l'unité ferroviaire (2) par un axe de liaison (12) monté sur l'unité ferroviaire (2), cet axe de liaison (12) étant reçu à pivotement dans un oblong (14) prévu dans chaque bras rigide (15) et susceptible de se déplacer dans cet oblong (14) selon une course limitée D prévue de chaque côté dans l'oblong (14), et **en ce qu'**une goupille de cisaillement (17) est introduite à travers l'oblong (14) de chaque bras rigide (15) et l'axe de liaison (12) qui lui est associé.

3. Unité ferroviaire (2) selon la revendication 2, **caractérisée en ce que** chaque bras rigide (15) est associé à une goupille de cisaillement (17), à une conduite de dérivation (20) et à un outil de sectionnement (22) qui sont distincts de ceux des autres bras rigides (15).

4. Unité ferroviaire (2) selon l'une quelconque des revendications précédentes, **caractérisée en ce que** chaque axe de liaison (12) est horizontal et transversal par rapport à l'unité ferroviaire (2) et **en ce que** la pièce rigide de liaison (6) s'étend de manière longitudinale par rapport à l'unité ferroviaire (2).

5. Unité ferroviaire (2) selon l'une quelconque des revendications précédentes, **caractérisée en ce que** la pièce rigide de liaison (6) est montée de manière articulée sur la structure réceptrice (5) au niveau d'une première extrémité (7).

6. Unité ferroviaire (2) selon l'une quelconque des revendications précédentes, **caractérisée en ce que** la pièce rigide de liaison (6) est montée de manière articulée sur l'unité ferroviaire (2) au niveau d'une seconde extrémité (9).

7. Unité ferroviaire (2) selon l'une quelconque des revendications précédentes, **caractérisée en ce que** chaque goupille de cisaillement (17) est sous la forme d'une tige filetée (18) présentant par exemple des zones d'affaiblissement prévus pour se rompre en cas de choc dépassant un certain seuil.

8. Unité ferroviaire (2) selon la revendication précédente, **caractérisée en ce que** chaque goupille de cisaillement (17) comporte une première gorge circulaire d'affaiblissement (19) prévue en partie supérieure de l'oblong (14) et une seconde gorge circulaire d'affaiblissement (19') prévue en partie inférieure de l'oblong (14).

9. Unité ferroviaire (2) selon l'une quelconque des revendications précédentes, **caractérisée en ce que** chaque conduite de dérivation (20) est une conduite de dérivation (20) semi-rigide.

10. Unité ferroviaire (2) selon l'une quelconque des revendications précédentes, **caractérisée en ce que** la partie (23) de chaque conduite de dérivation (20) prévue pour être sectionnée est située à proximité immédiate d'un outil de sectionnement (22) associé se présentant sous la forme d'une guillotine (25) comportant deux lames (26, 26') prévues chacune à l'avant et à l'arrière de la partie (23) à sectionner de la conduite de dérivation (20).

11. Unité ferroviaire (2) selon l'une quelconque des revendications précédentes, **caractérisée en ce que** chaque outil de sectionnement (22) comprend une plaque (27) présentant une ouverture (28) pour le passage de la partie (23) de la conduite de dérivation (20) prévue pour être sectionnée, les flancs verticaux de cette ouverture (28) étant pourvus d'un élément tranchant qui coupe la conduite de dérivation (20) lorsque la pièce rigide de liaison (6) se déplace longitudinalement.

12. Unité ferroviaire (2) selon l'une quelconque des revendications précédentes, **caractérisée en ce qu'**une conduite de dérivation (20) et un outil de sectionnement (22) associé sont prévus de chaque côté de la partie par laquelle la pièce rigide de liaison (6) est reliée à l'unité ferroviaire (2).

13. Unité ferroviaire (2) selon l'une quelconque des revendications précédentes, **caractérisée en ce qu'**elle comprend un robinet d'isolement (29) permettant d'isoler la ou les conduites de dérivation (20) par rapport à la conduite générale (21).

14. Unité ferroviaire (2) selon l'une quelconque des revendications précédentes, **caractérisée en ce que** la pièce rigide de liaison (6) comporte un dispositif de protection (31) de la structure réceptrice (5).

15. Unité ferroviaire (2) selon la revendication précédente, **caractérisée en ce que** le dispositif de protection (31) comprend une bâche (32) montée pivotante et prévue pour pouvoir être pivotée sur la structure réceptrice (5) pour la recouvrir au moins partiellement lorsqu'aucune semi-remorque n'est chargée sur l'unité ferroviaire (2).

## Patentansprüche

1. Eisenbahneinheit (2), auf die ein Sattelanhänger geladen werden soll, die ein Verriegelungssystem (1) zum Verriegeln des Kupplungsbolzens des Sattelanhängers mit einer Aufnahmestruktur (5) umfasst, das zur Aufnahme des Kupplungsbolzens vorgesehen ist, und die eine Hauptleitung zur Flüssigkeitsversorgung (21) umfasst, die insbesondere die Bremsen der Eisenbahneinheit (2) versorgt und steuert, **dadurch gekennzeichnet, dass** sie darüber hinaus auch eine Aufpralldetektionsvorrichtung (4) mit folgenden Mitteln umfasst:
- ein starres Verbindungsteil (6), das mit der Aufnahmestruktur (5) verbunden ist, wobei die Stöße, die von der Aufnahmestruktur (5) erlitten werden, auf das starre Verbindungsteil (6) übertragen werden;
- mindestens eine Verbindungsachse (12), durch die das starre Verbindungsteil (6) mit der Eisenbahneinheit (2) verbunden ist, wobei diese Verbindungsachse (12) an der Eisenbahneinheit (2) montiert ist, in einem im starren Verbindungsteil (6) vorgesehenen Langloch (14) schwenkbar ist und sich im Langloch (14) entsprechend einem begrenzten Hub D, der auf jeder Seite im Langloch (14) vorgesehen ist, bewegen kann;
- mindestens einen Scherstift (17), der durch die Verbindungsachse (12) und das Langloch (14) eingeführt ist, der die Bewegung der Verbindungsachse (12) im Langloch (14) verhindert, wobei dieser Scherstift (17) bei einem Aufprall über einen bestimmten Schwellenwert hinaus brechen und dann die Bewegung der Verbindungsachse (12) im Langloch (14) ermöglicht;
- mindestens eine Bypassleitung (20), die als Bypass an der Hauptleitung (21) der Eisenbahneinheit (2) montiert ist, wobei diese Bypassleitung (20) an dem starren Verbindungsteil (6) befestigt ist;
- mindestens ein an der Eisenbahneinheit (2) befestigtes Trennwerkzeug (22), das einen Teil (23) der Bypassleitung (20) abtrennt, wenn ein Scherstift (17) gebrochen ist und sich die Verbindungsachse (12) in dem zugehörigen Langloch (14) bewegt.

2. Eisenbahneinheit (2) nach Anspruch 1, **dadurch gekennzeichnet, dass** das starre Verbindungsteil (6) starre Arme (15) umfasst, die mit der Aufnahmestruktur (5) verbunden sind, wobei jeder starre Arm (15) darüber hinaus mit der Eisenbahneinheit (2) durch eine an der Eisenbahneinheit (2) montierte Verbindungsachse (12) verbunden ist, wobei diese Verbindungsachse (12) schwenkbar in einem in jedem starren Arm (15) vorgesehenen Langloch (14) aufgenommen ist und sich in diesem Langloch (14) entsprechend einem begrenzten Hub D auf jeder Seite des Langlochs (14) bewegen kann, und dass ein Scherstift (17) durch das Langloch (14) jedes starren Arms (15) und der ihm zugeordneten Verbindungsachse (12) eingeführt wird.

3. Eisenbahneinheit (2) nach Anspruch 2, **dadurch gekennzeichnet, dass** jedem starren Arm (15) ein Scherstift (17), eine Bypassleitung (20) und ein Trennwerkzeug (22) zugeordnet sind, die von denen der anderen starren Arme (15) getrennt sind.

4. Eisenbahneinheit (2) nach einem der vorstehenden Ansprüche, **dadurch gekennzeichnet, dass** jede Verbindungsachse (12) horizontal und quer zur Eisenbahneinheit (2) verläuft und dass sich das starre Verbindungsteil (6) in Längsrichtung zur Eisenbahneinheit (2) erstreckt.

5. Eisenbahneinheit (2) nach einem der vorstehenden Ansprüche, **dadurch gekennzeichnet, dass** das starre Verbindungsteil (6) an einem ersten Ende (7) schwenkbar an der Aufnahmestruktur (5) montiert ist.

6. Eisenbahneinheit (2) nach einem der vorstehenden Ansprüche, **dadurch gekennzeichnet, dass** das starre Verbindungsteil (6) an einem zweiten Ende (9) schwenkbar an der Eisenbahneinheit (2) montiert ist.

7. Eisenbahneinheit (2) nach einem der vorstehenden Ansprüche, **dadurch gekennzeichnet, dass** jeder Scherstift (17) in Form einer Gewindestange (18) ausgebildet ist, die beispielsweise Schwächungszonen aufweist, die bei einem Aufprall über einen bestimmten Schwellenwert hinaus brechen können.

8. Eisenbahneinheit (2) nach dem vorhergehenden Anspruch, **dadurch gekennzeichnet, dass** jeder Scherstift (17) eine erste kreisförmige Schwächungsnut (19), die oben auf dem Langloch (14) vorgesehen ist, sowie eine zweite kreisförmige Schwächungsnut (19') aufweist, die unten auf dem Langloch (14) vorgesehen ist.

9. Eisenbahneinheit (2) nach einem der vorstehenden Ansprüche, **dadurch gekennzeichnet, dass** jede Bypassleitung (20) eine halbstarre Bypassleitung (20) ist.

10. Eisenbahneinheit (2) nach einem der vorstehenden Ansprüche, **dadurch gekennzeichnet, dass** sich der/die Teil(e) (23) jeder zu trennenden Bypassleitung (20) in unmittelbarer Nähe eines zugehörigen Trennwerkzeugs (22) in Form einer Guillotine (25) mit zwei Klingen (26, 26') befindet, die jeweils an der Vorderseite und Rückseite des von der Bypassleitung (20) zu trennenden Teils (23) vorgesehen sind.

11. Eisenbahneinheit (2) nach einem der vorstehenden Ansprüche, **dadurch gekennzeichnet, dass** jedes Trennwerkzeug (22) eine Platte (27) mit einer Öffnung (28) für den Durchgang des Abschnitts (23) der abzutrennenden Bypassleitung (20) umfasst, wobei die vertikalen Seiten dieser Öffnung (28) mit einem Schneidelement versehen sind, das die Bypassleitung (20) durchtrennt, wenn sich das starre Verbindungsteil (6) längs bewegt.

12. Eisenbahneinheit (2) nach einem der vorstehenden Ansprüche, **dadurch gekennzeichnet, dass** auf jeder Seite des Teils, durch den das starre Verbindungsteil (6) mit der Eisenbahneinheit (2) verbunden ist, eine Bypassleitung (20) und ein zugehöriges Schneidwerkzeug (22) vorgesehen sind.

13. Eisenbahneinheit (2) nach einem der vorstehenden Ansprüche, **dadurch gekennzeichnet, dass** sie ein Absperrventil (29) zum Absperren der Bypassleitung(en) (20) von der Hauptleitung (21) umfasst.

14. Eisenbahneinheit (2) nach einem der vorstehenden Ansprüche, **dadurch gekennzeichnet, dass** das starre Verbindungsteil (6) eine Schutzvorrichtung (31) für die Aufnahmekonstruktion (5) umfasst.

15. Eisenbahneinheit (2) nach dem vorhergehenden Anspruch, **dadurch gekennzeichnet, dass** die Schutzvorrichtung (31) eine schwenkbare, auf der Aufnahmestruktur (5) schwenkbare Plane (32) umfasst, die diese zumindest teilweise abdeckt, wenn kein Sattelanhänger auf die Eisenbahneinheit (2) geladen wird.

## Claims

1. A railway unit (2) on which a semi-trailer is intended to be loaded, which includes a locking system (1) for the kingpin of said semi-trailer comprising a receiving structure (5) provided to receive said kingpin, and which includes a general pipe (21) for supplying fluid supplying and commanding in particular the brakes of the railway unit (2), **characterized in that** it further includes an impact detection device (4) comprising the following means:
- a rigid connecting piece (6) connected to the receiving structure (5), the impacts experienced by the receiving structure (5) being transmitted to said rigid connecting piece (6);
- at least one connecting shaft (12) by which the rigid connecting piece (6) is connected to the railway unit (2), this connecting shaft (12) being mounted on the railway unit (2), received pivoting in an oblong (14) provided in the rigid connecting piece (6) and able to move in the oblong (14) over a limited travel D provided on each side in the oblong (14);
- at least one shear pin (17) inserted through the connecting shaft (12) and the oblong (14) that prevents the connecting shaft (12) from moving in the oblong (14), this shear pin (17) being provided to break in case of impact exceeding a certain threshold and then allowing the connecting shaft (12) to move in the oblong (14);
- at least one bypass pipe (20) mounted as a bypass on the general pipe (21) of the railway unit (2), this bypass pipe (20) being secured to the rigid connecting piece (6);
- at least one cutoff tool (22) secured to the railway unit (2), which cuts off a part (23) of the bypass pipe (20) when a shear pin (17) is broken and a connecting shaft (12) is moving in the oblong (14) associated with it.

2. The railway unit (2) according to claim 1, **characterized in that** the rigid connecting piece (6) comprises rigid arms (15) connected to the receiving structure (5), each rigid arm (15) further being connected to the railway unit (2) by a connecting shaft (12) mounted on the railway unit (2), this connecting shaft (12) being received pivoting in an oblong (14) provided in each rigid arm (15) and able to move in this oblong (14) over a limited travel D provided on either side in the oblong (14), and **in that** a shear pin (17) is inserted through the oblong (14) of each rigid arm (15) and the connecting shaft (12) that is associated with it.

3. The railway unit (2) according to claim 2, **characterized in that** each rigid arm (15) is associated with a shear pin (17), a bypass pipe (20) and a cutoff tool (22) that are separate from those of the other rigid arms (15).

4. The railway unit (2) according to any one of the preceding claims, **characterized in that** each connecting shaft (12) is horizontal and transverse relative to the railway unit (2), and **in that** the rigid connecting piece (6) extends longitudinally relative to the railway unit (2).

5. The railway unit (2) according to any one of the preceding claims, **characterized in that** the rigid connecting piece (6) is mounted articulated on the receiving structure (5) at the level of a first end (7).

6. The railway unit (2) according to any one of the preceding claims, **characterized in that** the rigid connecting piece (6) is mounted articulated on the railway unit (2) at the level of a second end (9).

7. The railway unit (2) according to any one of the preceding claims, **characterized in that** each shear pin (17) is in the form of a threaded rod (18) for example having weak zones provided to break in case of impact exceeding a certain threshold.

8. The railway unit (2) according to the preceding claim, **characterized in that** each shear pin (17) includes a first circular weakening groove (19) provided in the upper part of the oblong (14) and a second circular weakening groove (19') provided in the lower part of the oblong (14).

9. The railway unit (2) according to any one of the preceding claims, **characterized in that** each bypass pipe (20) is a semi-rigid bypass pipe (20).

10. The railway unit (2) according to any one of the preceding claims, **characterized in that** the part (23) of each bypass pipe (20) provided to be cut off is located in the immediate vicinity of an associated cutoff tool (22) assuming the form of a guillotine (25) having two blades (26, 26') provided one in front of and one behind the part (23) of the bypass pipe (20) to be cut off.

11. The railway unit (2) according to any one of the preceding claims, **characterized in that** each cutoff tool (22) comprises a plate (27) having an opening (28) for the passage of the part (23) of the bypass pipe (20) provided to be cut off, the vertical flanks of this opening (28) being provided with a cutting element that cuts the bypass pipe (20) when the rigid connecting piece (6) moves longitudinally.

12. The railway unit (2) according to any one of the preceding claims, **characterized in that** a bypass pipe (20) and an associated cutoff tool (22) are provided on each side of the part by which the rigid connecting piece (6) is connected to the railway unit (2).

13. The railway unit (2) according to any one of the preceding claims, **characterized in that** it comprises an isolating tap (29) making it possible to isolate the bypass pipe(s) (20) relative to the general pipe (21).

14. The railway unit (2) according to any one of the preceding claims, **characterized in that** the rigid connecting piece (6) includes a protecting device (31) for the receiving structure (5).

15. The railway unit (2) according to the preceding claim, **characterized in that** the protecting device (31) comprises a tarp (32) mounted pivoting and provided to be able to be pivoted over the receiving structure (5) to cover it at least partially when no semi-trailer is loaded on the railway unit (2).
